# EUROPÄISCHE PATENTSCHRIFT

(11) **EP 3 756 980 B1**
(45) Veröffentlichungstag und Bekanntmachung des Hinweises auf die Patenterteilung: **10.01.2024**
(21) Anmeldenummer: 20175134.4
(22) Anmeldetag: 18.05.2020
(51) Int. Cl.: B62D 25/24, F16B 19/10, F16B 21/07, F16B 43/00, F16B 5/06

(54) **MONTAGESTOPFEN**
MOUNTING PLUG
BOUCHON DE MONTAGE

(30) Priorität: 28.06.2019 DE 102019117589
(43) Veröffentlichungstag der Anmeldung: 30.12.2020
(73) Patentinhaber: Illinois Tool Works Inc., Glenview, IL 60025 (US)
(72) Erfinder: Sánchez Burger, Sven, Glenview, IL Illinois 60025 (US)
(74) Vertreter: HGF

(56) Entgegenhaltungen:
- EP-A1- 3 363 715
- DE-A1-102017 128 814
- US-A1- 2006 201 906

## Beschreibung

Die Erfindung betrifft einen Montagestopfen nach dem Oberbegriff des Anspruchs 1.

In der DE 10 2017 128 814 A1 ist eine Befestigungsvorrichtung zur Befestigung eines Bauteils an einem Trägerbauteil offenbart. Dieses umfasst ein in eine Öffnung des Trägerbauteils einsetzbares Halteelement mit Rastmitteln zum lösbaren Verrasten an der Öffnung des Trägerbauteils und ein in das Halteelement einsetzbares Verriegelungselement, wobei bei in das Halteelement eingesetztem Verriegelungselement die Rastmittel des Halteelements gegen ein Lösen der Verrastung blockiert sind. Zudem weist das Halteelement ein Dichtungsring zur dichtenden Anlage an der Öffnung des Trägerbauteils auf.

Aus der EP 3 63715A1 geht ein Verschlussstopfen zum Verschließen einer Öffnung hervor. Der Verschlussstopfen umfasst einen ersten ringförmigen Körper, der in eine zu verschließende Öffnung einbringbar ist und der radial umlaufend und gleich beabstandet voneinander mehrere Anlageelemente aufweist. Der zweite Körper ist in den ersten Körper einbringbar, wobei durch eine axiale Verschiebung des zweiten Körpers im ersten Körper die Anlageelemente radial nach außen gedrückt werden, sodass eine Flächenpressung zwischen dem Verschlussstopfen und einer Öffnung vorhanden ist. Auf diese Weise soll der Verschlussstopfen abdichtend in einer Bauteilöffnung gehalten werden. Weiterhin ist der erste Körper (Deckelkomponente) relativ zum zweiten Körper (Einsatzkomponente) entlang einer Längsachse über eine Vorbefestigungskontur in einer Vormontagestellung anordbar.

In der US 2006/0201906 A1 ist ein Verschlussdeckel offenbart. Dieser umfasst zwei Kunststoffkomponenten zum dichtenden Abschluss einer Öffnung in einer Trägerplatte mit einem napfartig ausgebildeten Deckelteil und einem Einsatzteil. Das Einsatzteil ist relativ zum Deckelteil über entsprechende Rastmittel in einer Vormontageposition anordbar. Am Einsatzteil ist eine elastisch verformbare radial umlaufende Mantelwandung vorgesehen, die mittels des Deckelteils in radialer Richtung derart nach außen verschiebbar ist, dass diese an einer Kante einer zu verschließender Öffnung mittels Flächenpressung anliegt.

In vielen Bereichen, in denen insbesondere aus Blechen Baugruppen oder Funktionsgruppen gebildet werden, die Hohlräume enthalten, sind diese Hohlräume mit Öffnungen nach außen versehen, wobei diese Öffnungen häufig beispielsweise oval oder rund ausgebildet sind.

Insbesondere im Fahrzeugbau, speziell im Kraftfahrzeugbau, besitzen viele Karosseriehohlbereiche Löcher. Diese Löcher können einerseits daher rühren, dass die Bleche während der Umformung positioniert werden müssen oder beim Zusammenbau positioniert werden müssen, wobei Positionierstifte in die Löcher eingreifen.

Darüber hinaus werden häufig auch Löcher vorgesehen, um beispielsweise bei der Phosphortierbehandlung einer Karosserie den Flüssigkeitszutritt in die Hohlräume zuzulassen sowie Luft entweichen zu lassen, wenn die Karosserie in ein Phosphatier- oder in ein kathodisches Tauch-Lackierbad eingetaucht werden.

Derartige Hohlräume werden nach diesen Behandlungen oder auch nacherfolgten Hohlraumversiegelungsbehandlungen verschlossen.

Zum Verschluss derartiger Öffnungen ist es bekannt, Gummistopfen zu verwenden, die einen tellerartigen Grundkörper haben, von dem ein Stopfenschaft absteht, wobei der Stopfenschaft üblicherweise dem Durchmesser der Bohrung oder des Lochs in etwa entspricht und an seinem freien Ende einen umlaufenden, zum freien Ende hin konisch zulaufenden Schaftflansch besitzt, der nach dem Einstecken und Durchgreifen des Lochs elastisch nach außen federt und mit einer Kante, die üblicherweise senkrecht zur Schaftlängsachse verläuft, die Bohrung so hintergreift, dass der Stopfen nicht mehr aus diesem Loch herausfallen kann.

Bei derartigen Stopfen ist von Nachteil, dass sie, da der umlaufende Flansch weiter ist als die Lochöffnung, dem Einstecken einen erheblichen Widerstand entgegensetzen und sich dabei häufig der Schaft verbiegt. Hierdurch kann es passieren, dass der Monteur zwar den Eindruck hat, der Stopfen würde korrekt in der Karosseriebohrung oder dem Loch sitzen, tatsächlich der Flansch jedoch nicht vollständig das Loch hintergreift. In der Folge kommt es dazu, dass aufgrund der in Fahrzeugen unvermeidlichen Vibrationen der Stopfen wieder aus dem Loch herausgelangt und somit die Montage nicht erfolgreich war.

Im Bewusstsein eines solchen möglichen Montagefehlers wird auf derartige Gummistopfen teilweise zu viel Druck ausgeübt, so dass der tellerartige Grundkörper in das Loch gelangt und dann entweder wieder herausmanipuliert werden muss oder der Stopfen ganz hineinfällt, was die Montage zudem verlängert.

Aufgabe der Erfindung ist es, einen Montagestopfen zu schaffen, der zuverlässig und leicht montierbar ist und die Nachteile des Standes der Technik vermeidet.

Die Aufgabe wird mit einem Montagestopfen mit den Merkmalen des Anspruchs 1 gelöst. Vorteilhafte Weiterbildungen sind in den Unteransprüchen gekennzeichnet.

Der erfindungsgemäße Montagestopfen ist zumindest zweiteilig und vorzugsweise aus zwei Kunststoffteilen ausgebildet, wobei ein Kunststoffteil einen Radialbund aus einzelnen Spreizhakenelementen umfasst, welche nach außen vorstehende Hakenabschnitte besitzen und mit einem zweiten Spreizteil vormontiert verbunden ist, wobei der Radialbund in der Montagestellung einen Außendurchmesser aufweist, der dem des zu verschließenden Loches entspricht oder etwas geringer ist und wobei das Spreizelement so ausgebildet ist, dass es im Zusammenwirken mit dem Radialbund beim Einstecken des Montagestopfens und nach dem Erreichen eines Anschlages des Radialbundes das Spreizteil weiter eingeschoben wird und dabei den Radialbund nach außen spreizt, so dass die flanschartigen Elemente den Rand des Loches hintergreifen.

Durch die erfindungsgemäße Ausgestaltung sind die Nachteile des Standes der Technik vermieden, zudem ist die Montage besonders einfach und zuverlässig.

In einer vorteilhaften Weiterbildung besitzt dieser Montagestopfen zudem einen Dichtring, der vorzugsweise einstückig mit dem Radialbund verbunden ist und nach dem vollständigen Einschieben des Radialbundes mit Hilfe des Spreizteils an dem das Loch umgebende Blech oder dergleichen anliegt und zum einen für eine Dichtfunktion sorgt, wenn das Spreizteil den Radialbund aufgespreizt hat und zudem auch eine elastische Rückstellkraft auf den Montagestopfen derart ausübt, dass beispielsweise ein Klappern vermieden wird und Toleranzen in der Lochtiefe bzw. der Blechdicke sicher ausgeglichen werden.

Das Spreizteil und der Radialbund sind dabei in einer Montagestellung vorverrastet, so dass diese beiden Teile unverlierbar aneinandergehalten sind. Vorzugsweise ist ebenfalls die Endstellung, in der die Radialbundelemente durch das Spreizteil nach außen gespreizt sind und den Lochrand hintergreifen, mit einer Rast derart versehen, dass auch diese Stellung nicht von selbst lösbar ist. Ist es zudem unerwünscht, dass ein solcher Stopfen entfernt wird und ist es für die Erkennung einer Manipulation an dem Stopfen oder dem Hohlraum wichtig, dass eine Codierung der Manipulation erfolgen kann, so kann die zweite Raststellung unlösbar sein, so dass der Stopfen nur zerstörend entfernt werden kann, wobei die durch die Zerstörung abgetrennten Teile des Stopfens zumindest teilweise in den Hohlraum fallen und dort selbst bei der Ersetzung des Stopfens als Manipulationsnachweis verbleiben können.

Somit betrifft die Erfindung einen Montagestopfen zum Verschließen von Öffnungen, insbesondere Öffnungen in Karosserien und dergleichen, wobei der Montagestopfen eine erste Einrichtung besitzt, welche Mittel zum verriegelnden Hintergreifen einer Öffnungskante besitzt und zudem eine zweite Einrichtung vorhanden ist, mit der die Mittel zum verriegelnden Hintergreifen einer Lochkante radial nach außen in eine verriegelnde Stellung betätigbar sind, wobei die zweite Einrichtung in der ersten Einrichtung axial verschieblich ist und durch die axiale Verschiebung die Betätigung durchführbar ist.

Zwischen der ersten Einrichtung und der zweiten Einrichtung sind eine Vorraststellung und eine Endraststellung vorhanden, wobei bei der Vorraststellung die zweite Einrichtung zum Betätigen der Verriegelungseinrichtung unverlierbar vormontiert ist und in der zweiten Raststellung die zweite Einrichtung den verriegelnden Hintergriff der Lochkante durch die erste Einrichtung verrastend verriegelt.

Darüber hinaus ist es vorteilhaft, wenn die erste Einrichtung ein Spreizelement ist und die zweite Einrichtung ein Betätigungselement ist, wobei das Spreizelement eine Mehrzahl von Spreizhaken besitzt, welche jeweils eine nach außen vorstehende Wandung besitzen, mit der eine Lochkante hintergreifbar ist.

In einer Ausführungsform ist es vorgesehen, dass die Spreizhaken schräg nach innen sich erstreckende Steuerflächen aufweisen, welche den Durchmesser des Spreizelements verringern, wobei das Betätigungselement größer als der Durchmesser ist und beim Betätigen über die Steuerflächen die Spreizhaken radial nach außen verdrängend ausgebildet ist.

Bei einer weiteren vorteilhaften Ausführung ist ein Dichtelement vorhanden, wobei das Dichtelement am Spreizelement außen in Richtung der Spreizhaken angeordnet ist und eine Einrichtung zur elastischen Anlage an einem, ein zu verschließendes Loch bzw. eine zu verschließende Öffnung begrenzenden Materials besitzt.

Vorteilhafter Weise kann das Dichtelement zudem eine Einrichtung zur elastischen Anlage zwischen dem Betätigungselement und dem Spreizelement besitzt.

Zudem ist es möglich, dass am Spreizelement radial nach innen vorstehende Verriegelungslaschen angeordnet sind, welche beim Einstecken des Betätigungselements in das Spreizelement eine radiale Wandung eines Wulstes am Betätigungselement hintergreifend ausgebildet sind, so dass die Verriegelungslaschen das Betätigungselement unverlierbar halten.

Ferner kann es vorteilhaft sein, wenn die Spreizhaken eine radial nach innen vorstehende Stufe besitzen, welche mit einer Stufe des Betätigungselements hintergreifend verriegelnd zusammenwirkend ausgebildet ist.

Insbesondere betrifft die Erfindung auch einen Montagestopfen bei dem das Spreizelement einen Basisring der als flacher Scheibenring ausgebildet ist umfasst, wobei an dem Basisring axial zur einer Seite axial die Spreizhakenelemente entsprechend angeordnet sind, wobei die Spreizhakenelemente den Spreizhakenschaft und den Spreizhakenkopf besitzen, wobei der Spreizhakenschaft der Spreizhakenkopf und der Basisring einstückig ausgebildet sind.

Insbesondere von Vorteil ist, wenn der Spreizhakenkopf außenseitig den Spreizhakenschaft, der jeweils als Zylindersegment ausgebildet ist, erweitert und eine zylindrische Ebene Außenwandung besitzt mit einer radial nach außen vorstehenden Hakenwandung, wobei sich von jeder Hakenwandung ein oder zwei Steuerwandungen zu den oberen freien Ende des Spreizhakens erstrecken, der am Spreizhakenkopf ausgebildet ist, wobei die Steuerwandung seitlich mit einer Seitenwandung des Spreizhakens abschließen.

Erfindungsgemäß ist weiter von Vorteil, wenn radial nach innen an jedem Spreizhakenkopf eine Rastwandung vorsteht, welche den Spreizhakenkopf beabstandet zum freien Ende radial nach innen mit einer Stufe verbreitert, wobei von einer radial nach innen weisenden Innenkante der Wandung entlang beziehungsweise in Richtung zum Anbindungsbereich des Spreizhakenschafts am Basisring eine gebogene Steuerfläche verläuft, welche seitlich mit der Seitenwandung abschließt.

Bei einer weiteren vorteilhaften Ausführungsform besitzt das Dichtelement einen ringartigen Grundkörper, von dem sich entlang einer äußeren umlaufenden Kanten eine Fahne als Einrichtung zur elastischen Anlage nach schräg außen erstreckt, wobei unterhalb der Kante der ringartige Grundkörper eine stufenartige Ausnehmung besitzt, wobei an einer der Fahne axial gegenüberliegenden Ringfläche eine sich schräg nach außen, gegen die Erstreckungsrichtung der Fahne verlaufende umlaufende Dichtlippe als Einrichtung zur elastischen Anlage angeordnet ist.

Von Vorteil ist zudem, wenn sich von der Stufe Durchbrechungen durch den ringartigen Grundkörper zu einer radial inneren Fläche erstrecken.

Weiter bevorzugt kann die Form des elastischen Dichtelements an das Spreizelement so angepasst sein, dass die Stege die Ausnehmungen durchgreifen und im Bereich der Ausnehmungen der ringartige Grundkörper von der inneren Wandung zur Stufe durchgehend ausgebildet ist.

In einer Ausführungsform ist vorgesehen, dass das dauerelastische Dichtelement und das Spreizelement einstückig mit einander ausgebildet sind, jedoch mit unterschiedlichen Materialeigenschaften.

Insbesondere von Vorteil kann es sein, wenn das Betätigungselement und das Spreizelement aus einem relativ harten Kunststoff wie einem Plastik oder Hartplastik ausgebildet sind, und das Dichtelement aus einem weichen, nachgiebigen dauerelastischen Kunststoff ausgebildet ist.

Darüber hinaus ist es vorteilhaft, wenn im vormontierten Zustand das Betätigungselement axial in das Spreizelement eingeschoben angeordnet ist, wobei die Verriegelungslaschen in den Raum zwischen den Ring und Wulst eingreifen, wobei der Außendurchmesser des Wulstes und des Ringes so bemessen sind, dass sie dem Innendurchmesser des Basisrings entsprechen oder geringfügig kleiner sind, wobei das Betätigungselement hierdurch unverlierbar am Spreizelement durch die Verriegelungslaschen gehalten ist, wobei die Verriegelungslaschen vom Basisring nach innen von der inneren Umfangsfläche und Radialweite innen als eine innere Fläche des Spreizhakenschafts vorstehen, wobei sich die Verriegelungslaschen von einer unteren ebenen Kreisfläche des Basisrings schräg radial nach innen und axial in Richtung der Spreizhaken erstrecken.

Die Erfindung wird anhand einer Zeichnung beispielhaft erläutert. Es zeigen dabei:
- Figur 1: eine Ausführungsform des erfindungsgemäßen Montagestopfens in einer vormontierten Position;

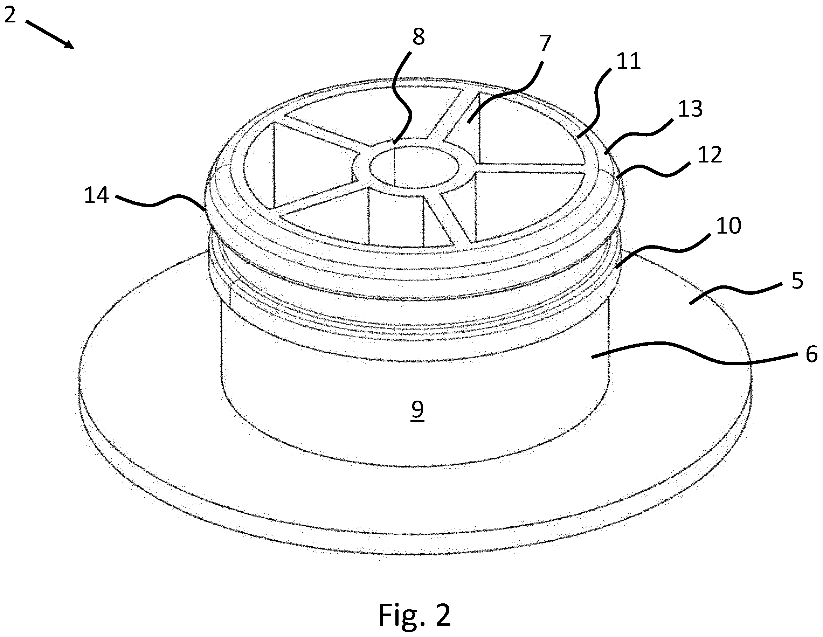

- Figur 2: eine Ausführungsform des Spreizelementes des erfindungsgemäßen Montagestopfens;
- Figur 3: das erfindungsgemäße Radialbundelement;
- Figur 4: eine Ausführungsform des erfindungsgemäßen Dichtungselementes;

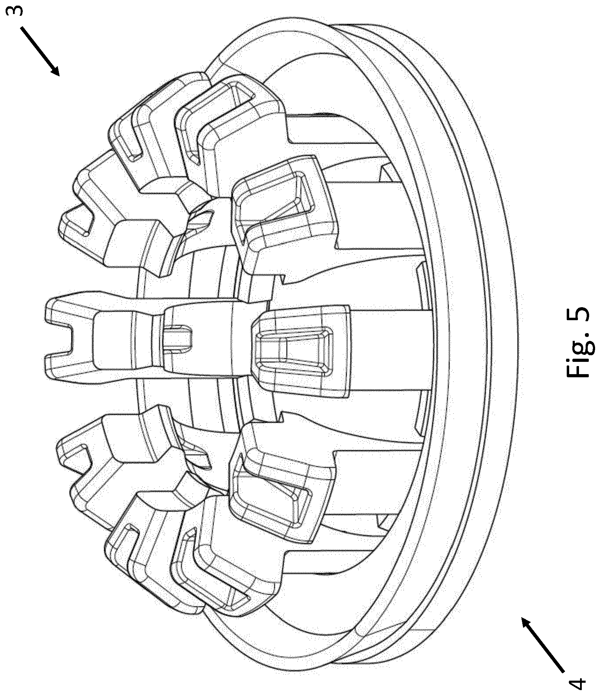

- Figur 5: das erfindungsgemäße Radialbundelement mit dem erfindungsgemäßen Dichtungselement in Kombination;
- Figur 6: eine teilgeschnittene Ansicht des erfindungsgemäßen Montagestopfens vor dem Einstecken in eine Karosserieöffnung in vormontierter Stellung;
- Figur 7: den erfindungsgemäßen Montagestopfen nach dem Durchstecken des Radialbundelementes durch die Karosserieöffnung;
- Figur 8: den erfindungsgemäßen Montagestopfen in der Karosserieöffnung bei weiterem Einschieben des Spreizelementes;
- Figur 9: den erfindungsgemäßen Montagestopfen in einer endmontierten Stellung in einem Querschnitt;

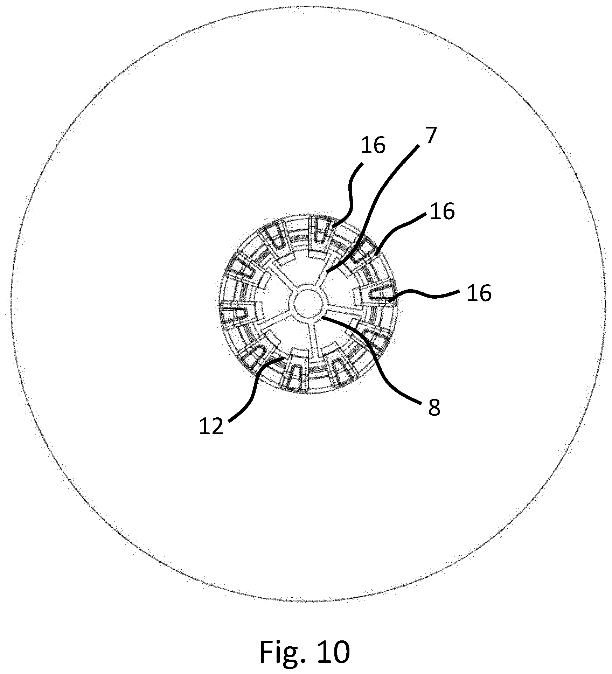

- Figur 10: den montierten Montagestopfen in montierter Stellung radialbundseitig in der Ansicht.

Ein erfindungsgemäßer Montagestopfen 1 weist ein Betätigungselement 2, ein Spreizelement 3 und gegebenenfalls ein Dichtelement 4 auf.

Das Betätigungselement ist eine Betätigungseinrichtung, mit der das Spreizelement als eine Spreiz- und Verriegelungseinrichtung betätigbar ist.

Das Dichtelement ist ein Element, was als Dichteinrichtung und Vorspanneinrichtung dient, wobei das Dichtelement 4 ein optionales Bauteil ist.

Das Betätigungselement besitzt einen flachen kreisscheibenförmigen Grundkörper 5, von dem koaxial ein Schaft 6 axial vorsteht, wobei der Schaft 6 einen Durchmesser hat, der kleiner ist als der Durchmesser des Grundkörpers 5. Der Schaft 6 ist zylindrisch ausgebildet, wobei aus Gründen der Fertigung und/oder Stabilität der Schaft 6 zylinderinnenseitig Versteifungsrippen 7 besitzt, die sich um einen zentralen mittigen und im Durchmesser kleineren, koaxialen, zylindrischen Abschnitt 8 zur Schaftinnenseite des Schafts 6 erstrecken.

An seiner Umfangswandung 9 besitzt der Schaft 6 axial beabstandet vom Grundkörper 5 einen Ring 10.

Der Ring 10 ist zu einer freien Zylindermantelkante 11, welche dem Grundkörper 5 diametral axial gegenüberliegt, beabstandet.

Von der freien Kante 11 erstreckt sich zum Ring 10 hin bzw. zum Grundkörper 5 hin ein dachartig nach außen abfallender Verriegelungswulst 12, wobei der Verriegelungswulst 12 die nach außen abfallende dachartige Fläche 13 besitzt und eine orthogonal zur Mantelwandung 9 verlaufende radiale Wandung 14.

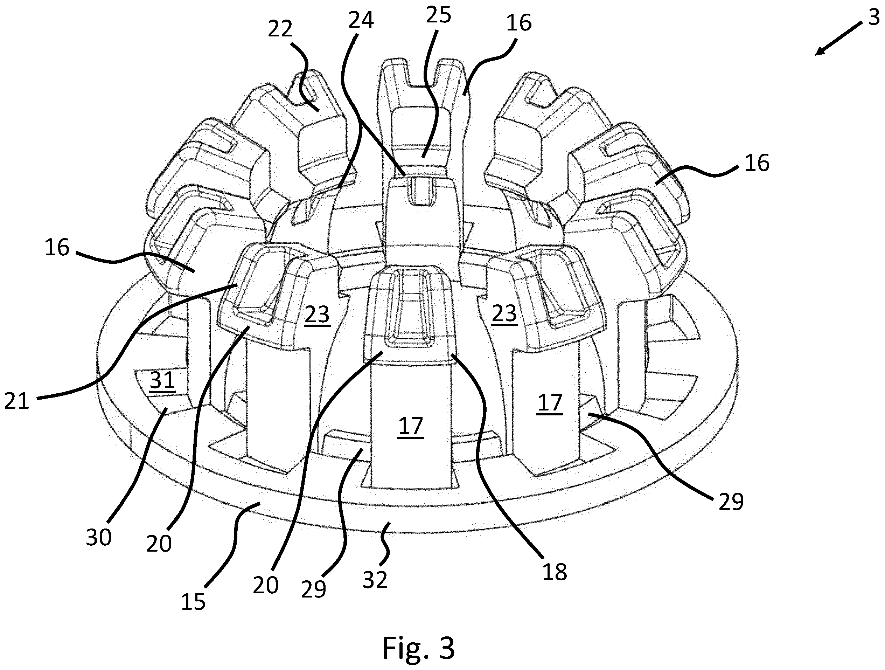

Das Spreizelement 3 (Figur 3) besitzt einen Basisring 15, der als flacher Scheibenring ausgebildet ist, wobei an dem Basisring 15 axial zu einer Seite sich axial erstreckende Spreizhakenelemente 16 angeordnet sind. Die Spreizhakenelemente 16 besitzen dabei einen Spreizhakenschaft 17 und einen Spreizhakenkopf 18. Spreizhakenschaft 17, Spreizhakenkopf 18 und Basisring15 sind vorzugsweise einstückig ausgebildet.

Außenseitig erweitert der Spreizhakenkopf 18 den Spreizhakenschaft 17, der jeweils als Zylindersegment ausgebildet ist und eine zylindrische ebene Außenwandung 19 besitzt, mit einer radial nach außen vorstehenden Hakenwandung 20.

Von jeder Hakenwandung 20 erstrecken sich eine oder zwei Steuerwandungen 21 zu einem oberen freien Ende 22 des Spreizhakens 16, der am Spreizhakenkopf 18 ausgebildet ist. Die Steuerwandungen 21 können seitlich mit einer Seitenwandung 23 des Spreizhakens abschließen.

Radial nach innen steht an jedem Spreizhakenkopf 18 eine Rastwandung 24 nach innen vor, welche den Spreizhakenkopf 18 beabstandet zum freien Ende radial nach innen mit einer Stufe 25 verbreitert. Von einer radial nach innen weisenden Innenkante 26 der Wandung 24 verläuft entlang bzw. in Richtung zum Anbindungsbereich des Spreizhakenschafts 17 am Basisring 15 eine gebogene Steuerfläche 27, welche seitlich mit der Seitenwandung 23 abschließen kann und aus Fertigungsgründen eine zentral mittige Durchbrechung 28 besitzen kann.

Bezogen auf die axiale Erstreckung des Spreizelements 3 vom Basisring 15 zu dem freien Ende 22 der jeweiligen Spreizhaken 16 sind die Stufe 25 bzw. die radiale Wandung 24 und die Hakenwandung 20, welche nach außen weist, axial geringfügig versetzt zueinander angeordnet, wobei die radiale Wandung 24 dem freien Ende 22 etwas näher ist, so dass die Stufe 25 bzw. die innere Kante 26 axial etwas näher zum freien Ende 22 als die Wandung 20 ausgebildet ist.

Vom Basisring 15 stehen nach innen von der inneren Umfangsfläche und radial weiter innen als eine innere Fläche des Spreizhakenschafts 17 Verriegelungslaschen 29 vor, welche sich von einer unteren ebenen Kreisfläche des Basisrings 15 schräg radial nach innen und axial in Richtung der Spreizhaken 16 erstrecken.

Zwischen den Spreizhaken 16 und dem Basisring 15 ist jeweils radial vor einem Spreizhaken 16 eine radial nach außen verlaufende, den Basisring 15 verjüngende, aber nicht durchbrechende Ausnehmung 30 angeordnet. Durch die Ausnehmungen 30 sind zwischen den Spreizhaken 16 Stege 31 ausgebildet, welche sich von einer äußeren Stirnkante 32 zu den Verriegelungslaschen 29 erstrecken.

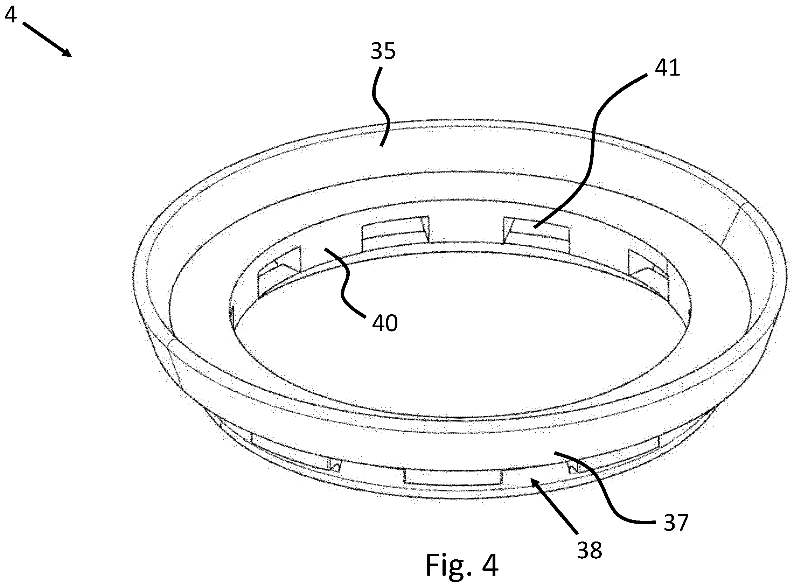

Das Dichtelement 4 (Figur 4) besitzt einen ringartigen Grundkörper, von dem sich entlang einer äußeren umlaufenden Kante 37 eine Fahne 35 nach schräg außen erstreckt. Unterhalb der Kante 37 besitzt der ringartige Grundkörper 34 eine stufenartige Ausnehmung 38. An einer der Fahne 35 axial gegenüberliegenden Ringfläche 39 ist eine sich schräg nach außen, gegen die Erstreckungsrichtung der Fahne 35 verlaufende umlaufende Dichtlippe 36 angeordnet.

Von der Stufe 38 erstrecken sich durch den ringartigen Grundkörper 34 zu einer radial inneren Fläche 40 Durchbrechungen 41.

Das Betätigungselement 2 und das Spreizelement 3 sind vorzugsweise aus einem relativ harten Kunststoff, wie einem Plastik oder Hartplastik, ausgebildet, während das Dichtelement 4 vorzugsweise aus einem weichen, nachgiebigen, dauerelastischen Kunststoff ausgebildet ist.

Die Form des elastischen Dichtelements 4 ist dabei an das Spreizelement 3 so angepasst, dass die Stege 31 die Ausnehmungen 41 durchgreifen und im Bereich der Ausnehmungen 30 der ringartige Grundkörper 34 von der inneren Wandung 40 zur Stufe 38 durchgehend ausgebildet ist.

Entsprechend der Möglichkeiten moderner Fertigungsverfahren ist es insbesondere bevorzugt, dass das dauerelastische Dichtelement 4 und das Spreizelement 3 einstückig miteinander ausgebildet sind, jedoch unterschiedliche Materialeigenschaften aufweisen.

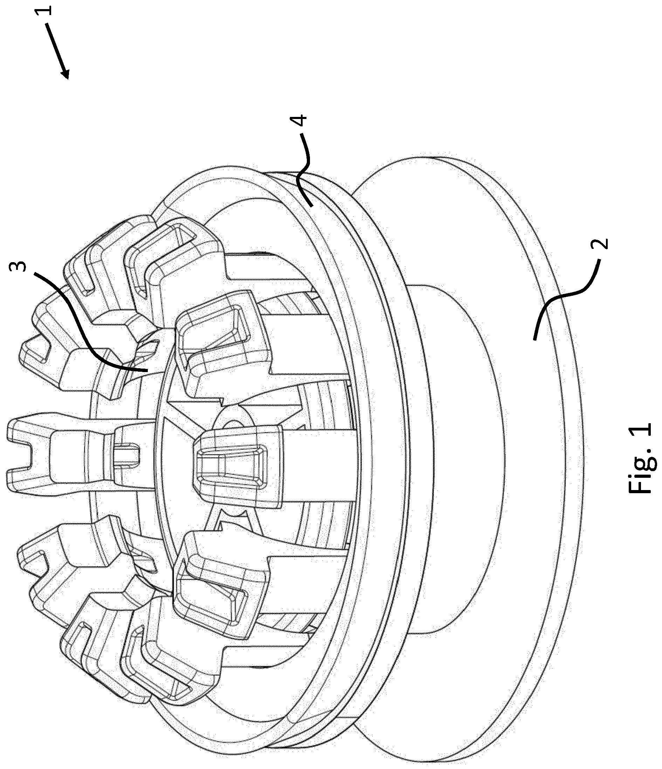

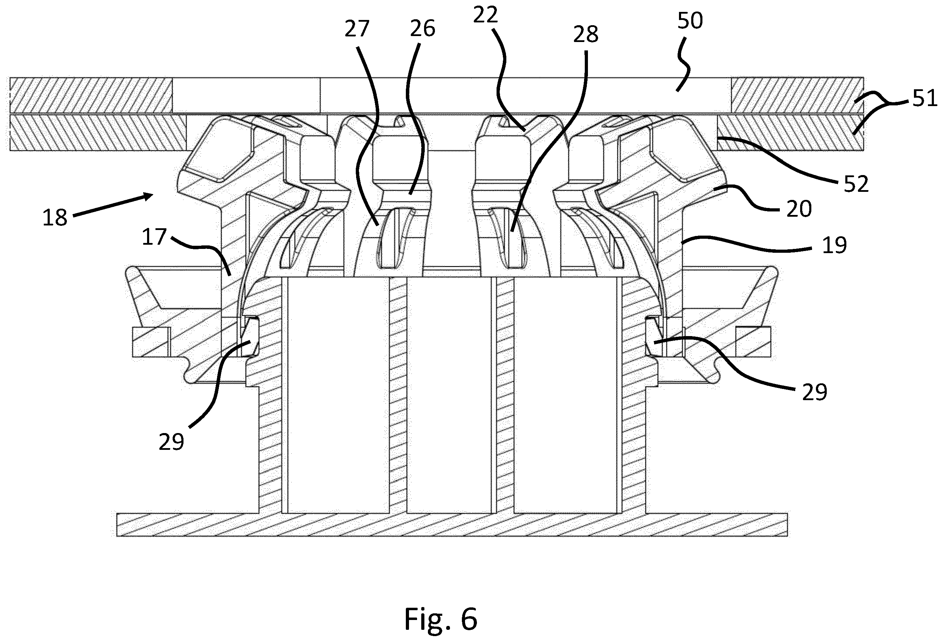

In vormontiertem Zustand (Figur 1, 6) ist das Betätigungselement 2 axial in das Spreizelement 3 eingeschoben, wobei die Verriegelungslaschen 29 in den Raum zwischen dem Ring 10 und dem Wulst 12 eingreifen, wobei der Außendurchmesser des Wulstes 12 und des Ringes 10 so bemessen sind, dass sie dem Innendurchmesser des Basisrings 15 entsprechen oder geringfügig kleiner sind.

In dieser Vormontagestellung ist das Betätigungselement 2 unverlierbar am Spreizelement 3 durch die Verriegelungslaschen 29 gehalten.

Zur Montage des Stopfens in einer Öffnung 50, welche beispielsweise durch zwei Bleche 51 begrenzt wird, wird der Montagestopfen mit den Spreizhakenköpfen 18 angesetzt. Vorzugsweise ist der Außendurchmesser der Spreizhaken 16, d.h. der maximale äußere Vorstand der Wandungen 20 so bemessen, dass er geringfügig größer ist als der Durchmesser der Öffnung 50. Hierdurch liegen die Steuerflächen 21 der Spreizhakenköpfe 18 zwischen deren freien Enden 22 und einer äußeren Kante der Wandungen 20 an einer Lochkante 52 an.

Wird nun Druck auf den Grundkörper 5 des Betätigungselementes 2 ausgeübt, drückt der Ring 10 zunächst an die Verriegelungslaschen 29 und schiebt somit das Spreizelement 3 etwas weiter in die Öffnung 50 hinein, wobei die Steuerflächen 21 an der Lochkante 52 entlanggleiten und hierdurch dafür sorgen, dass die Spreizhaken 16 nach innen gebogen werden.

Dadurch, dass die Spreizhaken nach innen gebogen werden, liegen die Steuerflächen 27, die nach innen ragen, an der äußeren Fläche 13, welche dachartig abfällt, des Wulstes 12 an und verhindern, dass der Wulst 12 axial an ihn entlanggleiten kann.

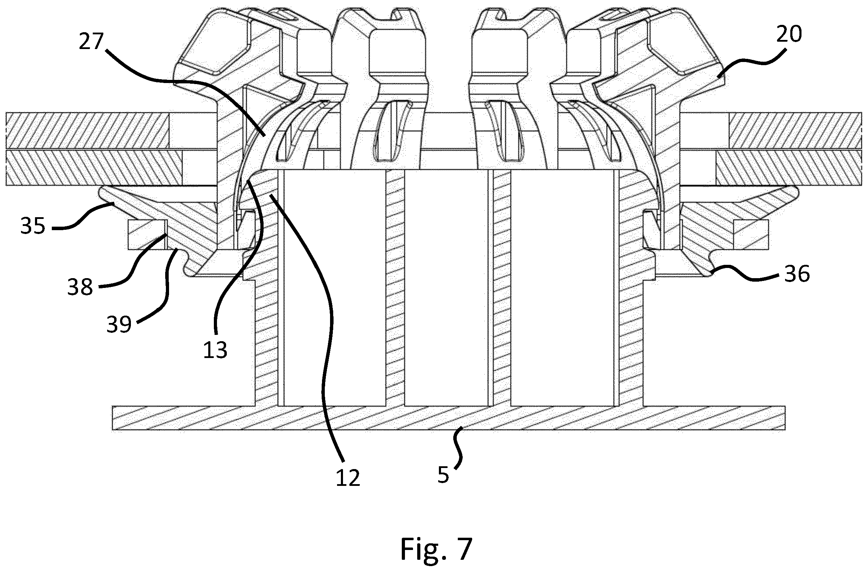

Gelangt durch diese Schubbewegung die Wandung 20 durch die Öffnung 50 hindurch (Figur 7), federn die Spreizhaken geringfügig elastisch nach außen.

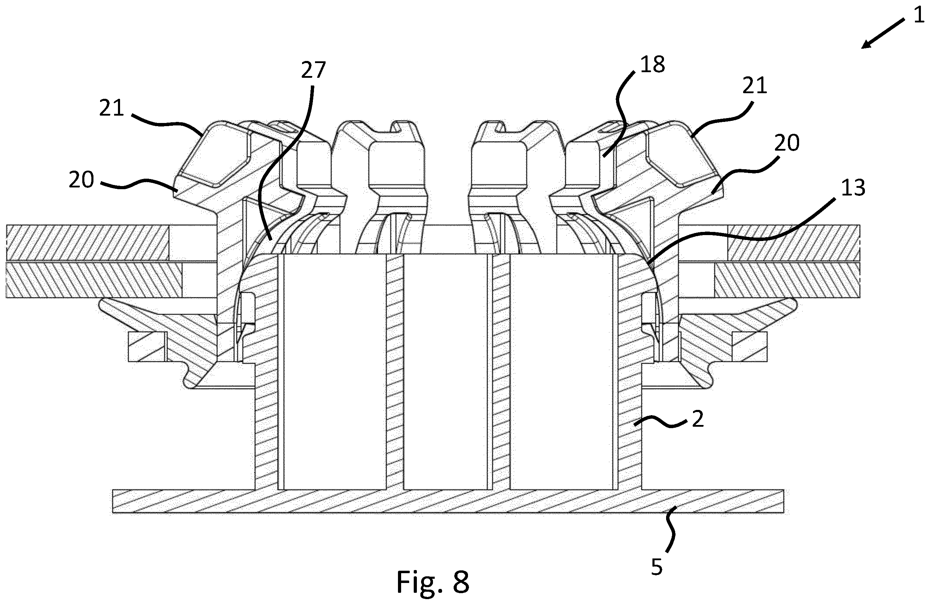

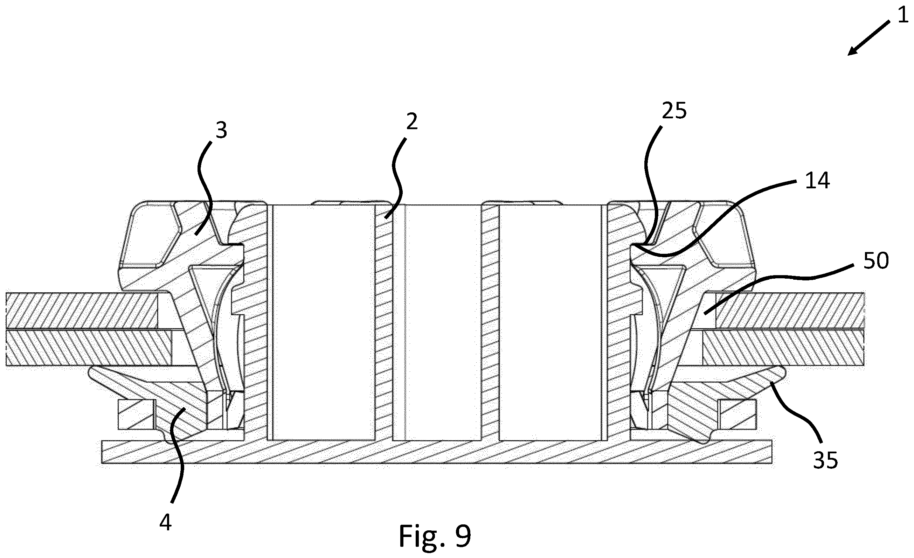

Da die Bewegung nach außen durch die Flächen 21 nun nicht weiter blockiert wird, kann bei vermehrtem Druck auf den Grundkörper 5 des Betätigungselements 2 die dachartig abfallende Fläche 13 des Wulstes 12 an den Flächen 27 entlanggleiten. Da der Schaft 6 des Betätigungselements insbesondere auch durch die Versteifungsrippen 7 nicht komprimierbar ist, wird bei weiterem Einschieben jeder Spreizhaken nach außen bewegt (Figur 8, Figur 9), bis die Spreizhaken das die Öffnung begrenzende Material hintergreifen (Figur 9).

Hierbei überfährt der Wulst 12 auch die nach innen weisende Kante 26 bzw. die Stufe 25, so dass die radiale Wandung 14 des Wulstes 12 die Stufe 25 hintergreift und die Hakenelemente elastisch geringfügig zurückfedern, so dass die Stufe 25 und die Wandung 14 verriegelnd zusammenwirken.

Beim Vorhandensein eines Dichtelementes 4, insbesondere einstückig am Spreizelement 3, liegt in diesem Fall die Fahne 35 elastisch verformt an dem das Loch bzw. die Öffnung 50 begrenzenden Material an, während die Lippe 36 am Grundkörper 5 des Betätigungselements anliegt, wodurch einerseits, sofern gewünscht, eine Abdichtung zwischen dem Grundkörper 5 und dem Spreizelement 3 einerseits, insbesondere dem die Öffnung 50 umgebenden Material herbeigeführt wird.

Zudem stützt sich die Fahne 35 am Basisring 15 ab und wirkt mit einer elastischen Rückstellkraft zwischen dem Basisring 15 und dem die Öffnung 50 umgebenden Material, so dass ein Spiel, welches zu Klappern führen würde, zwischen dem Spreizelement und dem die Öffnung, welche verschlossen wird, umgebenden Material verhindert wird.

Zudem wird auch durch die Lippe 36 ein Spiel zwischen dem Betätigungselement 2 und dem Spreizelement 3 verhindert.

Somit wird bei der Erfindung ein Spreizelement mit Rastelementen so in eine Öffnung eingeführt, dass die Rastelemente durch das Betätigungselement den Öffnungsrand hintergreifen und das Betätigungselement wiederum im Spreizelement verrastet, so dass durch die Verrastung des Betätigungselements im Spreizelement die Spreizung verrastet wird und zwischen dem Spreizelement und dem eine Öffnung umgebenden Material das Spreizelement verrastet und verankert wird. Hierdurch schließt der Grundkörper des Betätigungselements, gegebenenfalls unterstützt durch ein Dichtelement, die zu verschließende Öffnung ab.

Bei der Erfindung ist von Vorteil, dass durch den erfindungsgemäßen Montagestopfen in einfacher, zuverlässiger, nachvollziehbarer und fehlerunanfälliger Weise Löcher und insbesondere Löcher in Karosserien und dergleichen zuverlässig verschlossen und bei Vorhandensein eines Dichtelements auch abgedichtet werden können.

Der Fachmann versteht, dass das Dichtelement, welches im vorliegenden Fall einteilig ausgebildet ist und im Übrigen einstückig mit dem Spreizelement ausgebildet ist, auch ein separates Teil sein kann, welches beispielsweise zwischen Betätigungselement und Spreizelement lediglich klemmend gehalten wird oder an einem der beiden Elemente angeklebt ist oder mit einer Nut darauf befestigt ist oder dergleichen.

Die Zahl der Spreizhaken ist beliebig und wird abhängig vom Material so gewählt, dass die Spreizhaken nicht zu filigran sind, um einerseits die elastischen Rückstellkräfte aufrechtzuerhalten und andererseits einen Bruch bei der Montage zu vermeiden. Zudem werden die Spreizhaken nicht nur so wenige sein, dass die elastischen Rückstellkräfte bei der Montage zu groß sind. Beispielsweise werden zwischen 6 und 14 Spreizhaken verwendet, wobei die Zahl der Spreizhaken auch vom Durchmesser des Loches abhängt.

Es versteht sich, dass bei entsprechender Formgebung nicht nur runde Löcher, sondern auch ovale Karosserieöffnungen und andere Karosserieöffnungen einer beliebigen Formgebung mit einem solchen Montagestopfen verschließbar sind.

### Bezugszeichenliste:

1. Montagestopfen
2. Betätigungselement
3. Spreizelement
4. Dichtelement
5. Grundkörpers
6. Schaft
7. Versteifungsrippen
8. Zentralzylinder
9. Mantelwandung
10. Ring
11. Freie Kante
12. Wulst
13. Dachartige Fläche
14. Radiale Wandung
15. Basisring
16. Spreizhaken
17. Spreizhakenschaft
18. Spreizhakenkopf
19. Außenwandung von 17
20. Hakenwandung
21. Steuerwandung
22. Freies Ende
23. Seitenwandung
24. Radiale Wandung
25. Stufe
26. Radial innere Wandung
27. Steuerfläche
28. Durchbrechung
29. Verriegelungslasche
30. Ausnehmung
31. Stege
32. Stirnkante
34. Ringartiger Grundkörper
35. Fahne
36. Dichtlippe
37. Äußere Kante
38. Stufenartige Ausnehmung
39. Ringfläch
40. Radial innere Fläche
41. Durchbrechung

## Patentansprüche

1. Montagestopfen (1) zum Verschließen von Öffnungen, insbesondere Öffnungen in Karosserien und dergleichen, wobei der Montagestopfen (1) eine erste Einrichtung (3) und eine zweite Einrichtung (2) besitzt, wobei die zweite Einrichtung in der ersten Einrichtung axial verschieblich ist, wobei die erste Einrichtung Mittel (16) zum verriegelnden Hintergreifen einer Öffnungskante besitzt und mit der zweiten Einrichtung die Mittel zum verriegelnden Hintergreifen einer Öffnungskante radial nach außen in eine verriegelnde Stellung betätigbar sind, wobei durch die axiale Verschiebung der zweiten Einrichtung in der ersten Einrichtung die Betätigung durchführbar ist, wobei zwischen der ersten Einrichtung und der zweiten Einrichtung eine Vorraststellung und eine Endraststellung vorhanden sind, wobei bei der Vorraststellung die zweite Einrichtung zum Betätigen der Mittel zum verriegelnden Hintergreifen einer Öffnungskante unverlierbar in der ersten Einrichtung vormontiert ist und in der Endraststellung die zweite Einrichtung den verriegelnden Hintergriff der Mittel zum verriegelnden Hintergreifen einer Öffnungskante durch die erste Einrichtung verrastend verriegelt,
**dadurch gekennzeichnet, dass**
die zweite Einrichtung einen kreisscheibenförmigen Grundkörper (5) besitzt, von dem koaxial ein zylindrischer Schaft (6) axial vorsteht, wobei der Schaft (6) einen Durchmesser hat, der kleiner ist als der Durchmesser des Grundkörpers (5), wobei der Schaft (6) zylinderinnenseitig Versteifungsrippen (7) besitzt, die sich um einen zentralen mittigen und im Durchmesser kleineren, koaxialen, zylindrischen Abschnitt (8) zur Schaftinnenseite des Schafts (6) erstrecken.

2. Montagestopfen (1) nach Anspruch 1,
**dadurch gekennzeichnet,**
**dass** die erste Einrichtung ein Spreizelement (3) ist und die zweite Einrichtung ein Betätigungselement (2) ist, wobei das Spreizelement (3) eine Mehrzahl von Spreizhaken (16) besitzt, welche jeweils eine nach außen vorstehende Hakenwandung (20) besitzen, mit der eine Öffnungskante hintergreifbar ist.

3. Montagestopfen (1) nach Anspruch 2,
**dadurch gekennzeichnet,**
**dass** die Spreizhaken (16) sich schräg nach innen erstreckende Steuerflächen (27) aufweisen, welche einen Durchmesser des Spreizelements (3) verringern, wobei das Betätigungselement (2) größer als dieser Durchmesser ist und beim Betätigen über die Steuerflächen (27) die Spreizhaken (16) radial nach außen verdrängend ausgebildet ist.

4. Montagestopfen (1) nach Anspruch 2 oder 3,
**dadurch gekennzeichnet,**
**dass** ein Dichtelement (4) vorhanden ist, wobei das Dichtelement (4) am Spreizelement (3) außen in Richtung der Spreizhaken (16) angeordnet ist und eine Einrichtung zur elastischen Anlage an einem, ein zu verschließendes Loch bzw. eine zu verschließende Öffnung begrenzenden Material besitzt.

5. Montagestopfen (1) nach Anspruch 4,
**dadurch gekennzeichnet,**
**dass** das Dichtelement zudem eine Einrichtung zur elastischen Anlage zwischen dem Betätigungselement (2) und dem Spreizelement (3) besitzt.

6. Montagestopfen (1) nach einem der Ansprüche 2 bis 5,
**dadurch gekennzeichnet,**
**dass** am Spreizelement (3) radial nach innen vorstehende Verriegelungslaschen (29) angeordnet sind, welche beim Einstecken des Betätigungselements (2) in das Spreizelement (3) eine radiale Wandung (14) eines Wulstes (12) am Betätigungselement (2) hintergreifend ausgebildet sind, so dass die Verriegelungslaschen (29) das Betätigungselement (2) unverlierbar halten.

7. Montagestopfen (1) nach Anspruch 6,
**dadurch gekennzeichnet,**
**dass** die Spreizhaken (16) eine radial nach innen vorstehende Stufe (25) besitzen, welche mit der radialen Wandung (14) des Betätigungselements (2) hintergreifend verriegelnd zusammenwirkend ausgebildet ist.

8. Montagestopfen (1) nach einem der Ansprüche 2 bis 7,
**dadurch gekennzeichnet,**
**dass** das Spreizelement (3) einen Basisring (15), der als flacher Scheibenring ausgebildet ist, umfasst,
wobei an dem Basisring (15) axial zur einer Seite axial die Spreizhaken (16) entsprechend angeordnet sind,
wobei die Spreizhaken (16) einen Spreizhakenschaft (17) und einen Spreizhakenkopf (18) besitzen,
wobei der Spreizhakenschaft (17) der Spreizhakenkopf (18) und der Basisring (15) einstückig ausgebildet sind.

9. Montagestopfen (1) nach Anspruch 8,
**dadurch gekennzeichnet,**
**dass** der Spreizhakenkopf (8) außenseitig den Spreizhakenschaft (17), der jeweils als Zylindersegment ausgebildet ist, erweitert und eine zylindrische ebene Außenwandung besitzt mit einer radial nach außen vorstehenden Hakenwandung (20),
wobei sich von jeder Hakenwandung (20) ein oder zwei Steuerwandungen (21) zu den oberen freien Ende (22) des Spreizhakens (16) erstrecken, der am Spreizhakenkopf (18) ausgebildet ist,
wobei die ein oder zwei Steuerwandungen (21) seitlich mit einer Seitenwandung (23) des Spreizhakens abschließen.

10. Montagestopfen (1) nach Anspruch 8 oder 9,
**dadurch gekennzeichnet,**
**dass** radial nach innen an jedem Spreizhakenkopf (18) eine Rastwandung (24) nach innen vorsteht, welche den Spreizhakenkopf (18) beabstandet zum freien Ende radial nach innen mit einer Stufe (25) verbreitert,
wobei von einer radial nach innen weisenden Innenkante (26) der Wandung (24) entlang beziehungsweise in Richtung zum Anbindungsbereich des Spreizhakenschafts (17) am Basisring (15) eine gebogene Steuerfläche (27) verläuft, welche seitlich mit der Seitenwandung (23) abschließt.

11. Montagestopfen (1) nach einem der Ansprüche 4 bis 10,
**dadurch gekennzeichnet,**
**dass** das Dichtelement (4) einen ringartigen Grundkörper (34) besitzt,
von dem sich entlang einer äußeren umlaufenden Kanten (37) eine Fahne (35) als Einrichtung zur elastischen Anlage an dem das Loch bzw. die Öffnung begrenzenden Material nach schräg außen erstreckt,
wobei unterhalb der Kante (37) der ringartige Grundkörper (34) eine stufenartige Ausnehmung (38) besitzt,
wobei an einer der Fahne (35) axial gegenüberliegenden Ringfläche (39) eine sich schräg nach außen, gegen die Erstreckungsrichtung der Fahne (35) verlaufende umlaufende Dichtlippe (36) als Einrichtung zur elastischen Anlage zwischen dem Betätigungselement (2) und dem Spreizelement (3) angeordnet ist.

12. Montagestopfen (1) nach Anspruch 11,
**dadurch gekennzeichnet,**
**dass** sich von der stufenartigen Ausnehmung (38) Durchbrechungen (41) durch den ringartigen Grundkörper (34) zu einer radial inneren Fläche (40) erstrecken, wobei zwischen den Spreizhaken (16) und dem Basisring (15) jeweils radial vor einem Spreizhaken (16) eine radial nach außen verlaufende, den Basisring (15) verjüngende, Ausnehmung (30) angeordnet ist, wobei durch die Ausnehmungen (30) Stege (31) zwischen den Spreizhaken (16) ausgebildet sind, welche sich von einer äußeren Stirnkante (32) zu den Verriegelungslaschen (29) erstrecken,
wobei die Form des Dichtelements (4) an das Spreizelement (3) so angepasst ist, dass die Stege (31) die Ausnehmungen (41) durchgreifen und im Bereich der Ausnehmungen (30) der ringartige Grundkörper (34) von der inneren Wandung (40) zur Stufe (38) durchgehend ausgebildet ist.

13. Montagestopfen nach einem der Ansprüche 4 bis 12,
**dadurch gekennzeichnet,**
**dass** das Dichtelement (4) und das Spreizelement (3) einstückig mit einander ausgebildet sind, jedoch mit unterschiedlichen Materialeigenschaften,
wobei das Betätigungselement (2) und das Spreizelement (3) aus einem relativ harten Kunststoff wie einem Plastik oder Hartplastik ausgebildet sind,
und das Dichtelement (4) aus einem weichen, nachgiebigen dauerelastischen Kunststoff ausgebildet ist.

14. Montagestopfen (1) nach einem der Ansprüche 6 bis 13,
**dadurch gekennzeichnet,**
**dass** der Schaft 6 an seiner Umfangswandung 9 axial beabstandet vom Grundkörper 5 einen Ring 10 besitzt, wobei im vormontierten Zustand das Betätigungselement (2) axial in das Spreizelement (3) eingeschoben angeordnet ist,
wobei die Verriegelungslaschen (29) in einen Raum zwischen dem Ring (10) und dem Wulst (12) eingreifen,
wobei der Außendurchmesser des Wulstes (12) und des Ringes (10) so bemessen sind, dass sie dem Innendurchmesser des Basisrings (15) entsprechen oder geringfügig kleiner sind,
wobei das Betätigungselement (2) hierdurch unverlierbar am Spreizelement (3) durch die Verriegelungslaschen (29) gehalten ist,
wobei die Verriegelungslaschen (29) vom Basisring (15) nach innen von der inneren Umfangsfläche und Radialweite innen als eine innere Fläche des Spreizhakenschafts vorstehen,
wobei sich die Verriegelungslaschen (29) von einer unteren ebenen Kreisfläche des Basisrings (15) schräg radial nach innen und axial in Richtung der Spreizhaken (16) erstrecken.

## Claims

1. A mounting plug (1) for sealing openings, in particular openings in car bodies and the like, wherein the mounting plug (1) comprises a first device (3) and a second device (2), wherein the second device is axially displaceable in the first device, wherein
the first device comprises means (16) for rearwardly engaging with an opening edge in a locking fashion and, with the second device, the means for rearwardly engaging with an opening edge are actuatable radially outward into a locking position, wherein the actuation is feasible by the axial displacement of the second device in the first device, wherein there is a pre-latching position and an end-latching position between the first device and the second device, wherein, in the pre-latching position, the second device for actuating the means for rearwardly engaging with an opening edge in a locking fashion is pre-mounted in the first device in a loss-proof manner and, in the end-latching position, the second device locks the locking rearward engagement of the means for rearwardly engaging with an opening edge by the first device in a locking manner,
**characterized in that** the second device comprises a circular disk-shaped base body (5), coaxially from which a cylindrical shaft (6) axially protrudes, wherein the shaft (6) has a diameter that is smaller than the diameter of the base body (5), wherein the shaft (6) has stiffening ribs (7) on the inside of the cylinders, which extend around a central coaxial, cylindrical portion (8) on the shaft inside of the shaft (6) that has a smaller diameter.

2. The mounting plug (1) according to claim 1,
**characterized in that**
the first device is a spreading element (3) and the second device is an actuating element (2), wherein the spreading element (3) has a plurality of spreading hooks (16), each of which have an outwardly projecting hook wall (20), with which an opening edge can be rearwardly engaged.

3. The mounting plug (1) according to claim 2,
**characterized in that**
the spreading hooks (16) comprise inwardly extending control surfaces (27), which reduce a diameter of the spreading element (3), wherein the actuating element (2) is larger than this diameter and, when actuated via the control surfaces (27), is configured so as to radially displace the spreading hooks (16) outward.

4. The mounting plug (1) according to claim 2 or 3,
**characterized in that**
a sealing element (4) is present, wherein the sealing element (4) is arranged on the spreading element (3) on the outside in the direction of the spreading hooks (16) and comprises a device for the elastic abutment on a material bordering a hole to be closed or an opening to be closed.

5. The mounting plug (1) according to claim 4, **characterized in that**
the sealing element further comprises a device for the elastic abutment between the actuating element (2) and the spreading element (3).

6. The mounting plug (1) according to any one of claims 2 to 5,
**characterized in that**
radially-inwardly projecting locking tabs (29) are arranged on the spreading element (3), which, when the actuating element (2) is inserted into the spreading element (3), are configured so as to rearwardly engage with a radial wall (14) of a bead (12) on the actuating element (2), so that the locking tabs (29) hold the actuating element (2) in a loss-proof manner.

7. The mounting plug (1) according to claim 6,
**characterized in that**
the spreading hooks (16) have a radially-inwardly projecting step (25), which is configured so as to rearwardly engage with the radial wall (14) of the actuating element (2) in a cooperative, locking manner.

8. The mounting plug (1) according to any one of claims 2 to 7,
**characterized in that**
the spreading element (3) comprises a base ring (15) configured as a flat disc ring,
wherein, on the base ring (15), axially to one side, the spreading hooks (16) are arranged axially,
wherein the spreading hooks (16) have a spreading hook shaft (17) and a spreading hook head (18),
wherein the spreading hook shaft (17), the spreading hook head (18), and the base ring (15) are formed integrally.

9. The mounting plug (1) according to claim 8,
**characterized in that**
the spreading hook head (8) externally expands the spreading hook shaft (17), which is respectively configured as a cylindrical segment, and has a cylindrical planar outer wall with a radially outwardly projecting hook wall (20), wherein one or two control walls (21) extend from each hook wall (20) to the upper free end (22) of the spreading hook (16), which is formed on the spreading hook head (18),
wherein the one or two control walls (21) laterally terminate with a side wall (23) of the spreading hook.

10. The mounting plug (1) according to claim 8 or 9,
**characterized in that**
a latching wall (24) radially inwardly protrudes on each spreading hook head (18) and widens the spreading hook head (18) radially inwardly at a distance to the free end with a step (25),
wherein a curved control surface (27) extends from a radially inwardly facing inner edge (26) of the wall (24) along or towards the attachment area of the spreading hook shaft (17) on the base ring (15), which surface terminates laterally with the side wall (23).

11. The mounting plug (1) according to any one of claims 4 to 10,
**characterized in that**
the sealing element (4) has an annular base body (34),
from which a flag (35) extends obliquely outward along an outer circumferential edge (37) as a device for elastic abutment on the material bordering the hole or the opening, wherein, below the edge (37), the annular base body (34) has a stepwise recess (38),
wherein a sealing lip (36) is arranged on an annular surface (39) axially opposing the flag (35) as a device for elastic abutment between the actuating element (2) and the spreading element (3), extending circumferentially outwardly oblique counter to the direction of extension of the flag (35).

12. The mounting plug (1) according to claim 11,
**characterized in that**,
from the stepwise recess (38), openings (41) extend through the annular base body (34) to a radially inner surface (40), wherein, between the spreading hooks (16) and the base ring (15), a radially outward extending recess (30) is arranged which extends radially outward in front of a respective spreading hook (16) and tapers the base ring (15), wherein, with the recesses (30), bars (31) are formed between the spreading hooks (16), which extend from an outer end edge (32) to the locking tabs (29),
wherein the shape of the sealing element (4) is adapted to the spreading element (3) in such a way that the webs (31) penetrate the recesses (41) and, in the region of the recesses (30), the annular base body (34) is formed continuously from the inner wall (40) to the step (38).

13. The mounting plug according to any one of claims 4 to 12,
**characterized in that**
the sealing element (4) and the spreading element (3) are integrally formed with one another, but with different material properties,
wherein the actuating element (2) and the spreading element (3) are formed from a relatively hard synthetic material, such as plastic or hard plastic,
and the sealing element (4) is formed from a soft, compliant, permanently elastic synthetic material.

14. The mounting plug (1) according to any one of claims 6 to 13,
**characterized in that** the shaft 6 has a ring 10 on its peripheral wall 9, which is axially distanced from the base body 5, wherein, in the pre-mounted state, the actuating element (2) is arranged in an axially inserted position in the spreading element (3),
wherein the locking tabs (29) penetrate into a space between the ring (10) and the bead (12),
wherein the outer diameter of the bead (12) and the ring (10) have dimensions so as to correspond to or be slightly smaller than the inner diameter of the base ring (15), wherein the actuating element (2) is thus held in a loss-proof manner on the spreading element (3) by the locking tabs (29),
wherein the locking tabs (29) protrude inwardly from the base ring (15) from the inner peripheral surface and radial width as an inner surface of the spreading hook shaft, wherein the locking tabs (29) extend from a lower planar circular surface of the base ring (15) obliquely radially inwardly and axially towards the spreading hooks (16).

## Revendications

1. Bouchon de montage (1) pour la fermeture d'ouvertures, en particulier des ouvertures dans des carrosseries automobiles et analogues, dans lequel le bouchon de montage (1) comporte un premier dispositif (3) et un deuxième dispositif (2), dans lequel le deuxième dispositif peut être déplacé axialement dans le premier dispositif, dans lequel
le premier dispositif comprend des moyens (16) pour s'engager vers l'arrière avec un bord d'ouverture d'une manière verrouillée et, avec le deuxième dispositif, les moyens d'engagement vers l'arrière avec un bord d'ouverture sont actionnables radialement vers l'extérieur dans une position de verrouillage, dans lequel l'actionnement est réalisable par le déplacement axial du deuxième dispositif dans le premier dispositif, dans lequel il y a une position de pré-verrouillage et une position de verrouillage d'extrémité entre le premier dispositif et le deuxième dispositif, dans lequel, dans la position de pré-verrouillage, le deuxième dispositif pour l'actionnement des moyens d'engagement vers l'arrière avec un bord d'ouverture d'une manière verrouillée est pré-monté dans le premier dispositif d'une manière imperdable et, dans la position de verrouillage final, le deuxième dispositif verrouille l'engagement arrière de verrouillage des moyens pour s'engager vers l'arrière avec un bord d'ouverture par le premier dispositif d'une manière de verrouillage, **caractérisé en ce que** le deuxième dispositif comprend un corps de base (5) en forme de disque circulaire, coaxialement à partir duquel une tige cylindrique (6) fait saillie axialement, dans lequel la tige (6) a un diamètre qui est inférieur au diamètre du corps de base (5), dans lequel la tige (6) a des nervures de renforcement (7) sur l'intérieur des cylindres, qui s'étendent autour d'une partie cylindrique coaxiale centrale (8) sur la tige à l'intérieur de la tige (6) qui a un diamètre plus petit.

2. Bouchon de montage (1) selon la revendication 1,
**caractérisé en ce que**
le premier dispositif est un élément d'écartement (3) et le deuxième dispositif est un élément d'actionnement (2), dans lequel l'élément d'écartement (3) a une pluralité de crochets d'écartement (16) qui ont chacun une paroi de crochet (20) faisant saillie vers l'extérieur, avec laquelle un bord d'ouverture peut être engagé vers l'arrière.

3. Bouchon de montage (1) selon la revendication 2,
**caractérisé en ce que**
les crochets d'écartement (16) comportent des surfaces de commande (27) s'étendant vers l'intérieur, qui réduisent un diamètre de l'élément d'écartement (3), dans lequel
l'élément d'actionnement (2) est plus grand que ce diamètre et, lorsqu'il est actionné par l'intermédiaire des surfaces de commande (27), est configuré de manière à déplacer radialement les crochets d'écartement (16) vers l'extérieur.

4. Bouchon de montage (1) selon la revendication 2 ou 3,
**caractérisé en ce que**
un élément d'étanchéité (4) est présent, dans lequel l'élément d'étanchéité (4) est agencé sur l'élément d'écartement (3) à l'extérieur en direction des crochets d'écartement (16) et comprend un dispositif de butée élastique sur un matériau entourant un trou à fermer ou une ouverture à fermer.

5. Bouchon de montage (1) selon la revendication 4, **caractérisé en ce que**
l'élément d'étanchéité comprend en outre un dispositif de butée élastique entre l'élément d'actionnement (2) et l'élément d'écartement (3).

6. Bouchon de montage (1) selon l'une quelconque des revendications 2 à 5,
**caractérisé en ce que**
des languettes de verrouillage (29) faisant saillie radialement vers l'intérieur sont agencées sur l'élément d'écartement (3), lesquelles, lorsque l'élément d'actionnement (2) est inséré dans l'élément d'écartement (3), sont configurées de manière à s'engager vers l'arrière avec une paroi radiale (14) d'un bourrelet (12) sur l'élément d'actionnement (2), de sorte que les languettes de verrouillage (29) maintiennent l'élément d'actionnement (2) de manière imperdable.

7. Bouchon de montage (1) selon la revendication 6,
**caractérisé en ce que**
les crochets d'écartement (16) ont une avancée (25) faisant saillie radialement vers l'intérieur, qui est configurée de manière à s'engager vers l'arrière avec la paroi radiale (14) de l'élément d'actionnement (2) de manière coopérative et verrouillée.

8. Bouchon de montage (1) selon l'une quelconque des revendications 2 à 7,
**caractérisé en ce que**
l'élément d'écartement (3) comprend un anneau de base (15) configuré comme un anneau de disque plat,
dans lequel, sur l'anneau de base (15), axialement sur un côté, les crochets d'écartement (16) sont agencés axialement,
dans lequel les crochets d'écartement (16) ont une tige de crochet d'écartement (17) et une tête de crochet d'écartement (18),
dans lequel la tige de crochet d'écartement (17), la tête de crochet d'écartement (18), et l'anneau de base (15) sont formés d'un seul tenant.

9. Bouchon de montage (1) selon la revendication 8,
**caractérisé en ce que**
la tête de crochet d'écartement (8) étend extérieurement la tige de crochet d'écartement (17), qui est respectivement configurée comme un segment cylindrique, et a une paroi externe plane cylindrique avec une paroi de crochet (20) faisant saillie radialement vers l'extérieur,
dans lequel une ou deux parois de commande (21) s'étendant à partir de chaque paroi de crochet (20) jusqu'à l'extrémité libre supérieure (22) du crochet d'écartement (16), qui est formée sur la tête de crochet d'écartement (18),
dans lequel la ou les deux parois de commande (21) se terminent latéralement avec une paroi latérale (23) du crochet d'écartement.

10. Bouchon de montage (1) selon la revendication 8 ou 9,
**caractérisé en ce que**
une paroi de verrouillage (24) fait saillie radialement vers l'intérieur sur chaque tête de crochet d'écartement (18) et élargit la tête de crochet d'écartement (18) radialement vers l'intérieur à une distance de l'extrémité libre avec une avancée (25),
dans lequel une surface de commande incurvée (27) s'étend à partir d'un bord interne (26) orienté radialement vers l'intérieur de la paroi (24) le long ou vers la zone de fixation de la tige de crochet d'écartement (17) sur l'anneau de base (15), laquelle surface se termine latéralement avec la paroi latérale (23).

11. Bouchon de montage (1) selon l'une quelconque des revendications 4 à 10,
**caractérisé en ce que**
l'élément d'étanchéité (4) a un corps de base annulaire (34), à partir duquel un indicateur (35) s'étend obliquement vers l'extérieur le long d'un bord circonférentiel externe (37) en tant que dispositif pour une butée élastique sur le matériau bordant le trou ou l'ouverture,
dans lequel, en dessous du bord (37), le corps de base annulaire (34) a un évidement étagé (38),
dans lequel une lèvre d'étanchéité (36) est agencée sur une surface annulaire (39) axialement opposée à l'indicateur (35) en tant que dispositif de butée élastique entre l'élément d'actionnement (2) et l'élément d'écartement (3), s'étendant de manière circonférentielle vers l'extérieur en oblique à l'encontre de la direction d'extension de l'indicateur (35).

12. Bouchon de montage (1) selon la revendication 11,
**caractérisé en ce que**,
à partir de l'évidement progressif (38), des ouvertures (41) s'étendent à travers le corps de base annulaire (34) jusqu'à une surface radialement interne (40), dans lequel, entre les crochets d'écartement (16) et l'anneau de base (15), un évidement (30) s'étendant radialement vers l'extérieur est agencé qui s'étend radialement vers l'extérieur devant un crochet d'écartement respectif (16) et réduit l'anneau de base (15), dans lequel, avec les évidements (30), des barres (31) sont formées entre les crochets d'écartement (16), qui s'étendent à partir d'un bord d'extrémité externe (32) vers les languettes de verrouillage (29),
dans lequel la forme de l'élément d'étanchéité (4) est adaptée à l'élément d'écartement (3) de telle sorte que les nervures (31) pénètrent dans les évidements (41) et, dans la zone des évidements (30), le corps de base annulaire (34) est formé de manière continue à partir de la paroi interne (40) jusqu'à l'avancée (38).

13. Bouchon de montage selon l'une quelconque des revendications 4 à 12,
**caractérisé en ce que**
l'élément d'étanchéité (4) et l'élément d'écartement (3) sont formés d'un seul tenant l'un avec l'autre, mais avec des propriétés matérielles différentes,
dans lequel l'élément d'actionnement (2) et l'élément d'écartement (3) sont formés à partir d'un matériau synthétique relativement dur, tel que du plastique ou du plastique dur,
et l'élément d'étanchéité (4) est formé à partir d'un matériau synthétique souple, flexible et à élasticité permanente.

14. Bouchon de montage (1) selon l'une quelconque des revendications 6 à 13,
**caractérisé en ce que** la tige 6 a un anneau 10 sur sa paroi périphérique 9, qui est espacé axialement du corps de base 5, dans lequel, à l'état prémonté, l'élément d'actionnement (2) est
agencé dans une position insérée axialement dans l'élément d'écartement (3),
dans lequel les languettes de verrouillage (29) pénètrent dans un espace entre l'anneau (10) et le bourrelet (12), dans lequel le diamètre externe du bourrelet (12) et l'anneau (10) ont des dimensions de manière à correspondre ou sont légèrement inférieures au diamètre interne de l'anneau de base (15),
dans lequel l'élément d'actionnement (2) est ainsi maintenu de manière imperdable sur l'élément d'écartement (3) par les languettes de verrouillage (29),
dans lequel les languettes de verrouillage (29) font saillie vers l'intérieur à partir de l'anneau de base (15) à partir de la surface périphérique interne et la largeur radiale en tant que surface interne de la tige de crochet d'écartement, dans lequel les languettes de verrouillage (29) s'étendent à partir d'une surface circulaire plane inférieure de l'anneau de base (15) obliquement radialement vers l'intérieur et axialement vers les crochets d'écartement (16).
